# EUROPÄISCHE PATENTSCHRIFT

(11) **EP 3 311 111 B1**
(45) Veröffentlichungstag und Bekanntmachung des Hinweises auf die Patenterteilung: **21.08.2019**
(21) Anmeldenummer: 16731545.6
(22) Anmeldetag: 13.06.2016
(51) Int. Cl.: G01D 1/02, G01D 5/22

(54) **VERFAHREN UND VORRICHTUNG ZUR BESTIMMUNG EINES SENSORSIGNALS**
METHOD AND DEVICE FOR DETERMINING A SENSOR SIGNAL
PROCÉDÉ ET DISPOSITIF PERMETTANT DE DÉTERMINER UN SIGNAL DE CAPTEUR

(30) Priorität: 18.06.2015 DE 102015211260
(43) Veröffentlichungstag der Anmeldung: 25.04.2018
(73) Patentinhaber: Robert Bosch GmbH, 70442 Stuttgart (DE)
(72) Erfinder: UNGERMANN, Michael, 64285 Darmstadt (DE); LECHNER, Benjamin, 75242 Neuhausen (DE); ZIRKEL, Daniel, 75446 Wiernsheim-Serres (DE); RAICHLE, Daniel, 71665 Vaihingen (DE)
(86) Internationale Anmeldenummer: PCT/EP2016/063512
(87) Internationale Veröffentlichungsnummer: WO 2016/202743

(56) Entgegenhaltungen:
- EP-A1- 2 053 364
- WO-A2-99/22287
- DE-A1- 2 315 347
- US-A1- 2013 188 176

## Beschreibung

Die vorliegende Erfindung betrifft ein Verfahren und eine Vorrichtung zur Bestimmung eines Sensorsignals.

### Stand der Technik

Elektro- und Hybridfahrzeuge gewinnen zunehmend an Bedeutung. Zur Regelung von permanenterregten Synchronmaschinen (PSM) und elektrisch erregten Synchronmaschinen (ESM), wie sie in solchen Fahrzeugen eingesetzt werden, ist die Kenntnis des Rotorlagewinkels derartiger Maschinen erforderlich. Weiterhin ist zur Regelung von Asynchronmaschinen (ASM) die Kenntnis der elektrischen Frequenz des Antriebs notwendig. Zur Ermittlung des Rotorlagewinkels bzw. der elektrischen Frequenz können verschiedene Sensorarten eingesetzt werden. Zum Beispiel sind Sensoren auf Basis des Wirbelstrom-Effekts, Resolver oder digitale Winkelgeber möglich.

Ein Resolver wird dabei beispielsweise mit einem vorzugsweise sinusförmigen Trägersignal angeregt. Als Empfängersignale des Resolvers erhält man dabei in der Regel gestörte, amplitudenmodulierte Spannungen, aus deren Einhüllenden die Information über die Rotorlage gewonnen werden kann.

Die Druckschrift WO 99/22287 A2 offenbart einen Spitzenwertdetekor zur Detektion von Spitzenwerten, deren Betrag den Betrag von benachbarten Werten überschreitet.

Die DE2315347 offenbart eine Gewichtung phasenverschobener Signale.

Die deutsche Patentanmeldung DE 10 2011 078 583 A1 offenbart beispielsweise eine Auswertung von Resolver-Signalen in einem Fahrzeug. Ein Resolver nimmt hierzu eine Drehbewegung eines Rotors auf, und ein Prozessorelement verarbeitet die sinus- bzw. kosinusförmigen Ausgangssignale des Resolver.

Es besteht ein Bedarf nach einer zuverlässigen Bestimmung eines Sensorsignals. Insbesondere besteht beispielsweise ein Bedarf nach einer verlässlichen Bestimmung eines Rotorlagewinkels, auch bei einem gestörten Ausgangssignal eines Sensors.

### Offenbarung der Erfindung

Hierzu schafft die vorliegende Erfindung gemäß einem ersten Aspekt eine Vorrichtung zur Bestimmung eines Sensorsignals mit den Merkmalen des unabhängigen Patentanspruchs 1.

Gemäß einem weiteren Aspekt schafft die vorliegende Erfindung ein Verfahren zur Bestimmung eines Sensorsignals_mit den Merkmalen des nebengeordneten Patentanspruchs 8.

### Vorteile der Erfindung

Der vorliegenden Erfindung liegt die Idee zugrunde, für die Berechnung eines Sensorsignals_nicht nur einzelne, abgetastete Messwerte, wie zum Beispiels das Ausgangssignal von einem Winkellagegeber, auszuwerten, sondern eine Mehrzahl von aufeinanderfolgenden abgetasteten Messwerten zusammen auszuwerten. Hierzu kann eine Mehrzahl von aufeinanderfolgenden abgetasteten Messwerten individuell gewichtet werden. Diese individuelle Gewichtung der abgetasteten ermöglicht eine Berechnung des Sensorsignals. Insbesondere ermöglicht diese gewichtete Auswertung einer Mehrzahl von abgetasteten Messwerten beispielsweise die Bestimmung eines einhüllenden Signalverlaufs der Ausgangssignale eines Winkellagegebers.

Bei geeigneter Wahl der Gewichtungsvektoren kann dabei unter anderem zuverlässig ein möglicher Gleichanteil (Offset) unterdrückt werden, so dass Fehler in der Berechnung aufgrund eines Gleichanteils vermieden werden können. Durch Skalierung der Anzahl der gewichteten abgetasteten Messwerte kann das Verfahren dabei individuell an die zur Verfügung stehende Rechenkapazität für die Auswertung angepasst werden.

Die Verwendung eines variablen Gewichtungsvektors anstelle einer fest programmierten Gewichtung von Messwerten ermöglicht darüber hinaus eine einfache individuelle Anpassung der Auswertung, ohne dass hierzu eine vollständige Neuprogrammierung erfolgen muss.

Gemäß einer Ausführungsform ist der Gewichtungsvektor anpassbar. Beispielsweise kann der Gewichtungsvektor in einem Speicher der Gewichtungsvorrichtung abgespeichert werden. Durch einfaches Überschreiben dieses Gewichtungsvektors kann die individuelle Gewichtung der abgetasteten Messwerte angepasst werden, ohne dass hierzu eine vollständige Neuprogrammierung erforderlich ist.

Gemäß einer Ausführungsform umfasst die Vorrichtung ferner eine Synchronisationsvorrichtung, die dazu ausgelegt ist, die Elemente des Gewichtungsvektors basierend auf einer Phasenlage des abgetasteten Messsignals anzupassen. Insbesondere können die Gewichtungsvektoren dabei basierend auf einer Phasenlage einer Anregung eines Drehwinkelgebers angepasst werden.

Gemäß einer weiteren Ausführungsform ist die Recheneinrichtung dazu ausgelegt, die Elemente des gewichteten Messwertvektors zu summieren und die Berechnung des Sensorsignals unter Verwendung der summierten Elemente des Messwertvektors auszuführen. Dies ermöglicht eine schnelle und zuverlässige Berechnung des Sensorsignals.

Gemäß einer weiteren Ausführungsform ist die Gewichtungseinrichtung dazu ausgelegt, einen Gewichtungsvektor aus einer Mehrzahl von gespeicherten Gewichtungsvektoren auszuwählen. Auf diese Weise kann sehr schnell eine Anpassung der Gewichtung zur Adaption an geänderte Rahmenbedingungen erfolgen.

Gemäß einer weiteren Ausführungsform des Verfahrens zur Bestimmung des Sensorsignals_umfasst das Verfahren einen Schritt zum Synchronisieren des Gewichtungsvektors basierend auf einer Phasenlage des abgetasteten Messsignals. Insbesondere kann die Synchronisation des Gewichtungsvektors basierend auf der Phasenlage eines Erregersignals eines Resolvers erfolgen.

Gemäß einem weiteren Aspekt schafft die vorliegende Erfindung ein Antriebssystem mit einer elektrischen Maschine, einem Drehwinkelsensor und einer erfindungsgemäßen Vorrichtung zur Bestimmung eines Phasenwinkels. Die elektrische Maschine ist dabei mit einer Antriebswelle gekoppelt. Der Drehwinkelsensor ist ebenfalls mit der Antriebswelle gekoppelt. Ferner ist der Drehwinkelsensor dazu ausgelegt, ein zum Phasenwinkel der Antriebswelle korrespondierendes Winkelsignal bereitzustellen.

Gemäß einer Ausführungsform umfasst der Drehwinkelsensor dabei einen Resolver.

Weitere Ausführungsformen und Vorteile der vorliegenden Erfindung ergeben sich aus der nachfolgenden Beschreibung unter Bezug auf die beigefügten Zeichnungen.

### Kurze Beschreibung der Zeichnungen

Es zeigen:
- Figur 1:: eine schematische Darstellung eines elektrischen Antriebssystems gemäß einer Ausführungsform;
- Figur 2:: eine schematische Darstellung einer Vorrichtung zur Bestimmung eines Phasenwinkels gemäß einer Ausführungsform; und
- Figur 3:: eine schematische Darstellung eines Ablaufdiagramms, wie es einem Verfahren gemäß einer Ausführungsform zugrunde liegt.

### Beschreibung von Ausführungsformen

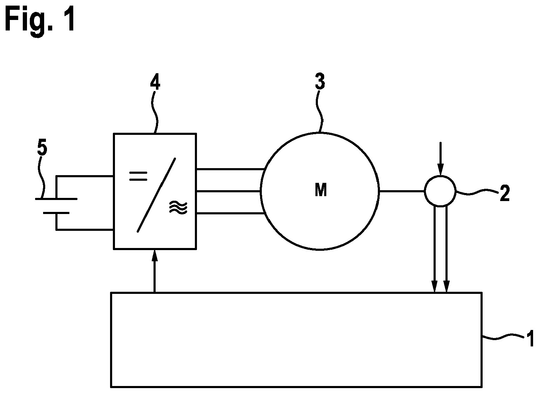

Figur 1 zeigt eine schematische Darstellung eines elektrischen Antriebssystems gemäß einer Ausführungsform. Eine elektrische Maschine 3 wird von einer elektrischen Energiequelle 5 über einen Stromrichter 4 gespeist. Beispielsweise kann es sich bei der elektrischen Energiequelle 5 um eine Traktionsbatterie eines Elektrofahrzeugs handeln. Bei der elektrischen Maschine 3 kann es sich beispielsweise um eine permanent erregte Synchronmaschine, eine elektrische erregte Synchronmaschine oder aber auch um eine Asynchronmaschine handeln. Grundsätzlich sind darüber hinaus auch andere elektrische Maschinen möglich. Die hier dargestellte Ausführungsform einer dreiphasigen elektrischen Maschine 3 stellte dabei nur eine beispielhafte Ausführungsform dar. Darüber hinaus sind auch elektrische Maschinen mit einer von drei abweichenden Anzahl von Phasen möglich. Der Stromrichter 4 konvertiert die von der elektrischen Energiequelle 5 bereitgestellte elektrische Energie und stellt die konvertierte elektrische Energie zur Ansteuerung der elektrischen Maschine 3 bereit. Die Ansteuerung der elektrischen Maschine 3 kann dabei basierend auf Vorgaben bzw. Steuersignalen von der Steuervorrichtung 1 erfolgen. Darüber hinaus kann beim Abbremsen der elektrischen Maschine 3 auch kinetische Energie durch die elektrische Maschine 3 in elektrische Energie umgewandelt werden und diese elektrische Energie über den Stromrichter 4 in einen elektrischen Energiespeicher der Energiequelle 5 eingespeist werden.

Für die Regelung einer permanent- oder elektrisch erregten Synchronmaschine ist dabei die Kenntnis über die Lage des Rotors in dieser Maschine erforderlich. Ferner ist für die Regelung von Asynchronmaschinen die Kenntnis der elektrischen Frequenz einer solchen Maschine notwendig. Hierzu kann die elektrische Maschine 3 mit einem Drehwinkelgeber 2 gekoppelt werden. Beispielsweise kann der Drehwinkelgeber 2 mit der Antriebsachse der elektrischen Maschine 3 gekoppelt werden. Beispielsweise sind zur Bestimmung der Rotorlage und/oder der elektrischen Frequenz der Maschine 3 Sensoren auf Basis des Wirbelstrom-Effekts, digitale Winkelgeber oder sogenannte Resolver möglich.

In einem Resolver sind in der Regel in einem Gehäuse zwei um 90° elektrisch versetzte Statorwicklungen angeordnet, die einen in dem Gehäuse gelagerten Rotor mit einer Rotorwicklung umschließen. Grundsätzlich sind verschiedene Alternativen zur Ermittlung der Winkellage möglich, von denen nachfolgend exemplarisch eine Möglichkeit beschrieben wird. Beispielsweise kann die Rotorwicklung des Resolvers mit einer sinusförmigen Wechselspannung angeregt werden. Die Amplituden der in den beiden Statorwicklungen des Resolvers induzierten Spannungen sind dabei abhängig von der Winkellage des Rotors und hängen mit dem Sinus und dem Kosinus der Winkellage des Rotors zusammen. Somit kann die Winkellage des Rotors aus dem Arkustangens (arctan) der Signale der beiden Statorwicklungen des Resolvers berechnet werden.

Der Resolver wird dabei mit einem Trägersignal angeregt. Das Trägersignal ist typischerweise sinusförmig, kann jedoch auch andere Signalformen aufweisen. Als Ausgangssignal liefert der Resolver amplitudenmodulierte Signale, in deren Einhüllenden die Information über die Rotorlage enthalten ist. Ziel einer Winkelberechnung ist es daher, aus den amplitudenmodulierten Ausgangssignalen des Resolvers die Rotorlage (den Phasenwinkel) zu bestimmen.

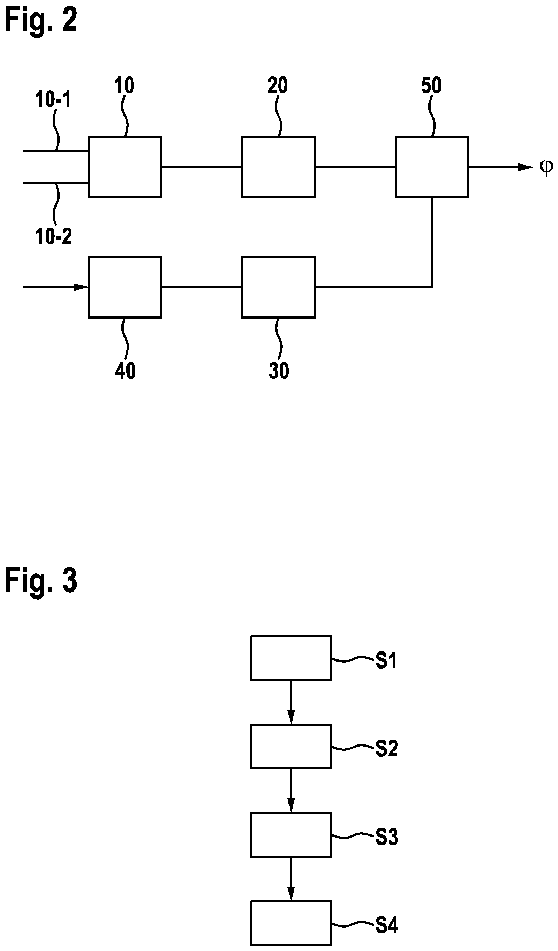

Figur 2 zeigt eine schematische Darstellung einer Vorrichtung zur Bestimmung eines Phasenwinkels gemäß einer Ausführungsform. Die Signale 10-1 und 10-2 des Resolvers werden dabei zunächst einer Abtastvorrichtung 10 zugeführt. Bei der Abtastvorrichtung 10 kann es sich zum Beispiel um einen Analog-DigitalWandler handeln. Die Abtastvorrichtung 10 tastet die Signale des Resolvers mit einer vorgegebenen, in der Regel konstanten, Abtastrate ab. Die abgetasteten Werte werden daraufhin zur Weiterverarbeitung zunächst in einem Speicher 20 zwischengespeichert. Bei dem Speicher 20 kann es sich beispielsweise um einen zyklischen Speicher handeln, der eine vorbestimmte Anzahl von abgetasteten Werten speichert. Beim Einschreiben eines weiteren Wertes wird dabei jeweils der älteste gespeicherte Wert überschrieben. Andere Speicherarten sind jedoch ebenso möglich. Beispielsweise kann der Speicher 20 jeweils zehn abgetastete Messwerte für jedes abgetastete Signal speichern. Eine davon abweichende Anzahl von abgetasteten Messwerten für jedes abgetastete Signal ist darüber hinaus ebenso möglich. In einer Gewichtungseinrichtung 30 ist ferner ein Gewichtungsvektor abgespeichert. Der Gewichtungsvektor kann dabei fest in der Gewichtungsvorrichtung 30 abgespeichert sein. Alternativ ist es auch möglich, dass der Gewichtungsvektor durch eine externe Vorrichtung (hier nicht dargestellt) überschrieben bzw. verändert werden kann. Ferner kann die Gewichtungsvorrichtung 30 auch einen Speicher umfassen, in dem eine Mehrzahl von verschiedenen Gewichtungsvektoren abgelegt ist. In diesem Fall kann basierend auf vorbestimmten Parametern einer der Mehrzahl von abgespeicherten Gewichtungsvektoren für die weitere Verarbeitung ausgewählt werden. Grundsätzlich ist es auch möglich, dass der Gewichtungsvektor basierend auf empfangenen weiteren Parametern oder Sensorsignalen dynamisch angepasst wird.

Je nach Parametrisierung des Gewichtungsvektors können durch die Gewichtungsvektoren auch bereits bekannte Verfahren zur Rekonstruktion der Einhüllenden des Signalsverlaufs aus den Ausgangssignalen eines Winkellagegebers nachgebildet werden. Nachfolgend sind hierzu einige Beispiele für mögliche Gewichtungsvektoren und deren korrespondierendes Verfahren wiedergegeben. Dabei dient die gewählte Anzahl von zehn Elementen für den Gewichtungsvektor lediglich einem besseren Verständnis und soll keine Beschränkung der Anzahl von Elementen für einen Gewichtungsvektor darstellen.

| | |
|---|---|
| a = [0 0 1 0 0 0 0 0 0 0] | Max-Verfahren |
| a = [0 0 0 0 0 0 0 -1 0 0] | Min-Verfahren |
| a = [0 0 0 1 0 0 0 -1 0 0] | Min-Max-Verfahren |
| a = [1 1 1 1 1 -1 -1 -1 -1 -1] | Integrations-Verfahren |
| aᵢ = sin(i/10^{∗}2^{∗}π) mit i = 0..9 | kohärente Demodulation mit gleitendem Mittelwert als Tiefpass |

Darüber hinaus sind je nach Anwendungsfall beliebige weitere Gewichtungsvektoren a ebenso möglich. Insbesondere kann durch die Verwendung von punktsymmetrischen Gewichtungsvektoren ein möglicher Gleichanteil (Offset) während der Messung der Signale von dem Drehwinkelgeber unterdrückt werden. Ferner kann auch insbesondere bei einem nicht-sinusförmigen Erregersignal für den Drehwinkelgeber durch Anpassung der Elemente des Gewichtungsvektors eine Offline-Anpassung erfolgen. Werden darüber hinaus in den Signalen von dem Drehwinkelgeber beispielsweise Störungen (zum Beispiel Stör-Peaks) detektiert, so kann der entsprechende Gewichtungsvektor auch Online individuell an ein solches detektiertes Störsignal angepasst werden. Hierdurch kann beispielsweise eine Unterdrückung eines detektierten Störsignals erfolgen. Beispielsweise kann bei bekannten Schaltzeitpunkten einer Leistungselektronik im Umfeld des Drehwinkelgebers eine durch diese Schaltvorgänge hervorgerufene Störung unterdrückt werden. Darüber hinaus kann auch durch Anpassung der Elemente des Gewichtungsvektors bereits eine gewünschte Filtereigenschaft für die Signalverarbeitung erzielt werden.

Wie bereits zuvor angeführt, ist die gewählte Anzahl von zehn Elementen für den Gewichtungsvektor nur beispielhaft zu verstehen. Insbesondere kann die Anzahl der Elemente des Gewichtungsvektors dabei an die zur Verfügung stehende Rechenkapazität des Gesamtsystems angepasst werden.

Die Gewichtungseinrichtung 30 passt gegebenenfalls den Gewichtungsvektor a an die weiteren Rahmenbedingungen an und multipliziert daraufhin jeweils ein Element des Gewichtungsvektors mit einem Element eines Messwertvektors, der aus der Mehrzahl der in dem Speicher 20 gespeicherten abgetasteten Winkelsignale gebildet wird. Dabei weist der Messwertvektor eine gleiche Anzahl von Elementen auf wie der Gewichtungsvektor. Als Ergebnis dieser Multiplikation ergibt sich somit ein gewichteter Messwertvektor.

Basierend auf diesem gewichteten Messwertvektor erfolgt daraufhin eine Bestimmung der einhüllenden Signalverläufe der von dem Drehwinkelgeber bereitgestellten Signale per Summation aller Elemente des gewichteten Messwertvektors sowie eine Berechnung des dazu korrespondierenden Phasenwinkels. Die Berechnung des Phasenwinkels kann dabei basierend auf bekannten oder neuartigen Verfahren in einer Berechnungseinrichtung 50 erfolgen.

Nachfolgend ist das Verfahren noch einmal detaillierter beschrieben.

In einem ersten Schritt erfolgt zunächst eine Identifikation des letzten Abtastwerts vor der Berechnung. In diesem Schritt wird der letzte Abtastwert vor einem Bezugszeitpunkt eines Rechenrasters identifiziert. Beispielsweise kann hierzu der Zeitstempel der Abtastwerte mit einem Zeitstempel eines Bezugszeitpunktes in dem Rechenraster verglichen werden.

Anschließend erfolgt eine Synchronisation zur Ausrichtung der Gewichte des Gewichtungsvektors. Hierzu wird eine genaue Phasenlage des Trägers in dem Erregersignal benötigt. Für diese Synchronisation, das heißt die Ermittlung der Phasenlage wird dabei ein Synchronisationssignal bereitgestellt, das beispielsweise aus dem zurückgelesenen Erregersignal oder den Messsignalen gewonnen werden kann. Diese Synchronisation kann beispielsweise in einer Synchronisationsvorrichtung 40 erfolgen.

Ausgehend von der genauen Phasenlage des Trägers in den Erregersignalen, die während der Synchronisation ermittelt wurden, sowie gegebenenfalls weiteren Kriterien wie zum Beispiel eine Detektion von Störungen oder der Bestimmung von Schaltzeitpunkten, kann daraufhin ein geeigneter Gewichtungsvektor ermittelt werden.

Die abgetasteten Messwerte in dem Speicher 20 werden als Elemente eines Messvektors mit den Elementen des Gewichtungsvektors jeweils elementweise multipliziert und anschließend aufsummiert.

Anschließend erfolgt eine Berechnung der einhüllenden Wellenform der amplitudenmodulierten Ausgangssignale des Drehwinkelgebers und daraus eine Berechnung des Phasenwinkels. Für eine spätere Totzeitkompensation kann darüber hinaus eine Totzeit zwischen dem Zeitpunkt, zu dem der Wert der einhüllenden Wellenform rekonstruiert wurde und einem Bezugszeitpunkt des Rechenrasters ermittelt werden.

Figur 3 zeigt eine Darstellung eines Ablaufdiagramms, wie es einem Verfahrens zur Bestimmung eines Sensorsignals gemäß einer Ausführungsform zugrunde liegt.

In Schritt S1 werden zunächst ein oder mehrere Messsignale mit einer ersten Abtastrate abgetastet. Anschließend werden in Schritt S2 die abgetasteten Werte gespeichert. Wie bereits zuvor beschrieben kann daraufhin ein Gewichtungsvektor ausgelesen oder gegebenenfalls berechnet bzw. angepasst werden. Daraufhin erfolgt in Schritt S3 eine Multiplikation einer vorbestimmten Anzahl von gespeicherten abgetasteten Werten des Messsignals mit den Elementen des Gewichtungsvektors. In Schritt S4 erfolgt daraufhin eine Berechnung des Sensorsignals_unter Verwendung des Produkts aus abgetasteten Werten und Gewichtungsvektor.

Zusammenfassend betrifft die vorliegende Erfindung die Rekonstruktion einer einhüllenden Wellenform eines Messsignals zur Bestimmung eines .Sensorsignals. Beispielsweise kann das Signal eines Drehwinkelgebers (insbesondere eines Resolvers) zur Rekonstruktion eines Rotorlagewinkels verarbeitet werden. Hierzu wird eine vorgegebene Anzahl von aufeinanderfolgenden abgetasteten Werten eines Signals von einem Drehwinkelgeber mit den Elementen eines Gewichtungsvektors multipliziert. Basierend auf einem so gewichteten Messvektor kann daraufhin eine einhüllende Wellenform eines Signalverlaufs von einem Drehwinkelgeber bestimmt werden und daraus ein Phasenwinkel berechnet werden.

## Patentansprüche

1. Vorrichtung zur Bestimmung eines Sensorsignals, mit:
einer Erfassungseinrichtung (10), die dazu ausgelegt ist, ein Messsignal mit einer vorbestimmten Abtastrate zu erfassen, wobei das Messsignal zwei gegeneinander phasenverschobene Messsignale umfasst;
einem Speicher (20), der dazu ausgelegt ist, eine Mehrzahl von aufeinander folgenden abgetasteten Messsignalen zu speichern;
einer Gewichtungseinrichtung, die dazu ausgelegt ist, einen Messwertvektor mit der Mehrzahl von gespeicherten Messsignalen mit einem vorbestimmten Gewichtungsvektor zu multiplizieren und das Ergebnis als gewichteten Messwertvektor auszugeben, wobei die Gewichtungseinrichtung die beiden Messsignale mit dem Gewichtungsvektor multipliziert; und
einer Recheneinrichtung (50), die dazu ausgelegt ist, ein Sensorsignal basierend auf dem gewichteten Messwertvektor zu berechnen, wobei die Recheneinrichtung (50) die Berechnung des Sensorsignals_unter Verwendung beider gewichteten Messsignale ausführt.

2. Vorrichtung nach Anspruch 1, wobei der Gewichtungsvektor anpassbar ist.

3. Vorrichtung nach Anspruch 1 oder 2, mit einer Synchronisationsvorrichtung (40), die dazu ausgelegt ist, die Elemente des Gewichtungsvektors basierend auf einer Phasenlage des abgetasteten Messsignals anzupassen.

4. Vorrichtung nach einem der Ansprüche 1 bis 3, wobei die Recheneinrichtung (50) dazu ausgelegt ist, die Elemente des gewichteten Messwertvektors zu summieren und die Berechnung des Sensorsignals_unter Verwendung der summierten Elemente des Messwertvektors auszuführen.

5. Vorrichtung nach einem der Ansprüche 1 des 4, wobei die Gewichtungseinrichtung (30) dazu ausgelegt ist, einen Gewichtungsvektor aus einer Mehrzahl von gespeicherten Gewichtungsvektoren auszuwählen.

6. Antriebssystem, mit:
einer elektrischen Maschine (3), die mit einer Antriebswelle gekoppelt ist;
einen Drehwinkelsensor (2), der mit der Antriebswelle gekoppelt ist, und der dazu ausgelegt ist, ein zu der Winkellage der Antriebswelle korrespondierendes Messsignal bereitzustellen; und
eine Vorrichtung zur Verarbeitung eines Sensorsignals_nach einem der Ansprüche 1 bis 5.

7. Antriebssystem nach Anspruch 6, wobei der Drehwinkelgeber (2) einen Resolver umfasst.

8. Verfahren zur Bestimmung eines Sensorsignals, mit den Schritten:
Erfassen (S1) eines Messsignals mit einer ersten Abtastrate, wobei das Messsignal zwei gegeneinander phasenverschobene Messsignale umfasst;
Speichern (S2) des abgetasteten Werts des Messsignals;
Multiplizieren (S3) einer vorbestimmten Anzahl von gespeicherten abgetasteten Werten des Messsignals mit einem Gewichtungsvektor, wobei das Multiplizieren eine Multiplikation der beiden Messsignale mit dem Gewichtungsvektor umfasst; und ein gewichteter Messwertvektor ausgegeben wird; und
Berechnen (S4) eines Sensorsignals_unter Verwendung des gewichteten Messwertvektors und der Summe der Produkte aus gespeicherten abgetasteten Werten und Gewichtungsvektor,
wobei die Berechnung des Sensorsignals_unter Verwendung beider gewichteten Messsignale ausgeführt wird.

9. Verfahren nach Anspruch 8, ferner umfassend einen Schritt zum Synchronisieren des Gewichtungsvektors basierend auf der Phasenlage des abgetasteten Winkelsignals.

## Claims

1. Apparatus for determining a sensor signal, having:
a recording device (10) that is designed to record a measurement signal at a predetermined sampling rate wherein the measurement signal comprises two measurement signals phase-shifted relative to one another;
a memory (20) that is designed to store a plurality of successive sampled measurement signals;
a weighting device that is designed to multiply a measured value vector having the plurality of stored measurement signals by a predetermined weighting vector and to output the result as a weighted measured value vector, wherein the weighting device multiplies the two measurement signals by the weighting vector; and
a computation device (50) that is designed to compute a sensor signal based on the weighted measured value vector, wherein the computation device (50) carries out the computation of the sensor signal using the two weighted measurement signals.

2. Apparatus according to Claim 1, wherein the weighting vector is customizable.

3. Apparatus according to Claim 1 or 2, having a synchronization apparatus (40) that is designed to customize the elements of the weighting vector based on a phase angle of the sampled measurement signal.

4. Apparatus according to one of Claims 1 to 3, wherein the computation device (50) is designed to sum the elements of the weighted measured value vector and to carry out the computation of the sensor signal using the summed elements of the measured value vector.

5. Apparatus according to one of Claims 1 to 4, wherein the weighting device (30) is designed to select a weighting vector from a plurality of stored weighting vectors.

6. Drive system, having:
an electrical machine (3) that is coupled to a driveshaft;
a rotation angle sensor (2) that is coupled to the driveshaft and that is designed to provide a measurement signal corresponding to the angular position of the driveshaft; and
an apparatus for processing a sensor signal according to one of Claims 1 to 5.

7. Drive system according to Claim 6, wherein the rotation angle sensor (2) comprises a resolver.

8. Method for determining a sensor signal, having the steps of:
recording (S1) a measurement signal at a first sampling rate, wherein the measurement signal comprises two measurement signals phase-shifted relative to one another;
storing (S2) the sampled value of the measurement signal;
multiplying (S3) a predetermined number of stored sampled values of the measurement signal by a weighting vector, wherein the multiplying comprises a multiplication of the two measurement signals by the weighting vector; and a weighted measured value vector is output; and
computing (S4) a sensor signal using the weighted measured value vector and the sum of the products of the stored sampled values and the weighting vector, wherein the computation of the sensor signal is carried out using the two weighted measurement signals.

9. Method according to Claim 8, further comprising a step for synchronizing the weighting vector based on the phase angle of the sampled angle signal.

## Revendications

1. Dispositif de détermination d'un signal de capteur, le dispositif comprenant :
un moyen de détection (10) conçu pour détecter un signal de mesure ayant une fréquence d'échantillonnage prédéterminée, le signal de mesure comportant deux signaux de mesure déphasés l'un par rapport à l'autre ;
une mémoire (20) conçue pour mémoriser une pluralité de signaux de mesure échantillonnés successifs ;
un moyen de pondération conçu pour multiplier un vecteur de valeur de mesure comportant la pluralité de signaux de mesure mémorisés par un vecteur de pondération prédéterminé et pour délivrer le résultat sous la forme d'un vecteur de valeur de mesure pondéré, le moyen de pondération multipliant les deux signaux de mesure par le vecteur de pondération ; et
un moyen de calcul (50) conçu pour calculer un signal de capteur sur la base du vecteur de valeur de mesure pondéré, le moyen de calcul (50) effectuant le calcul du signal de capteur en utilisant les deux signaux de mesure pondérés.

2. Dispositif selon la revendication 1, le vecteur de pondération étant adaptable.

3. Dispositif selon la revendication 1 ou 2, comprenant un dispositif de synchronisation (40) conçu pour adapter les éléments du vecteur de pondération sur la base d'une position de phase du signal de mesure échantillonné.

4. Dispositif selon l'une des revendications 1 à 3, le moyen de calcul (50) étant conçu pour additionner les éléments du vecteur de valeur de mesuré pondéré et pour effectuer le calcul du signal de capteur en utilisant les éléments sommés du vecteur de valeur de mesure.

5. Dispositif selon l'une des revendications 1 à 4, le moyen de pondération (30) étant conçu pour sélectionner un vecteur de pondération parmi une pluralité de vecteurs de pondération mémorisés.

6. Système d'entraînement comprenant :
une machine électrique (3) accouplée à un arbre d'entraînement ;
un capteur d'angle de rotation (2) accouplé à l'arbre d'entraînement et conçu pour produire un signal de mesure correspondant à la position angulaire de l'arbre d'entraînement ; et
un dispositif de traitement d'un signal de capteur selon l'une des revendications 1 à 5.

7. Système d'entraînement selon la revendication 6, le capteur d'angle de rotation (2) comprenant un résolveur.

8. Procédé de détermination d'un signal de capteur, le procédé comprenant les étapes suivantes :
détecter (S1) un signal de mesure ayant une première fréquence d'échantillonnage, le signal de mesure comprenant deux signaux de mesure déphasés l'un par rapport à l'autre ;
mémoriser (S2) la valeur échantillonnée du signal de mesure ;
multiplier (S3) un nombre prédéterminé de valeurs échantillonnées mémorisées du signal de mesure par un vecteur de pondération, la multiplication comprenant la multiplication des deux signaux de mesure par le vecteur de pondération, et un vecteur de valeur de mesure pondéré étant délivré ; et
calculer (S4) un signal de capteur à l'aide du vecteur de mesure pondéré et de la somme des produits des valeurs échantillonnées et du vecteur de pondération mémorisés, le calcul du signal de capteur étant effectué à l'aide des deux signaux de mesure pondérés.

9. Procédé selon la revendication 8, comprenant en outre une étape de synchronisation du vecteur de pondération sur la base de l'angle de phase du signal d'angle échantillonné.
